# EUROPEAN PATENT SPECIFICATION

(11) **EP 2 782 650 B1**
(45) Date of publication and mention of the grant of the patent: **24.10.2018**
(21) Application number: 12851646.5
(22) Date of filing: 21.11.2012
(51) Int. Cl.: A63H 19/24, A63H 19/10, H04N 7/18

(54) **WIRELESS VIDEO SYSTEM FOR MODEL RAILROAD ENGINES**
DRAHTLOSES VIDEOSYSTEM FÜR MODELLEISENBAHNMOTOREN
SYSTÈME VIDÉO SANS FIL POUR MOTEURS DE LOCOMOTIVES MINIATURES

(30) Priority: 23.11.2011 US 201161563309 P
(43) Date of publication of application: 01.10.2014
(73) Proprietor: Bartlett, Richard, Houston, TX 77025 (US); Bartlett, William, Houston, TX 77025 (US)
(72) Inventor: Bartlett, Richard, Houston, TX 77025 (US)
(74) Representative: White, Duncan Rohan
(86) International application number: PCT/US2012/066207
(87) International publication number: WO 2013/078273

(56) References cited:
- JP-A- 2006 204 491
- US-A- 4 839 754
- US-A- 4 839 754
- US-A1- 2001 022 513
- US-A1- 2005 022 688
- US-A1- 2005 184 197
- US-A1- 2005 184 197
- US-A1- 2006 090 667
- US-A1- 2007 001 058
- US-A1- 2007 001 058
- US-A1- 2007 241 726
- US-A1- 2009 162 814
- US-A1- 2009 162 814
- "Excerpts ED - Fette; Bruce A Aiello; Roberto Miron; Douglas B", 1 September 2007 (2007-09-01), RF AND WIRELESS TECHNOLOGIES: KNOW IT ALL, NEWNES, PAGE(S) 30,92,95 - 98, XP008173441, ISBN: 978-0-7506-8581-8 * page 30, paragraph 2 * * page 92, paragraph 2 *
- FETTE ET AL.: 'RF & wireless technologies.' September 2007, pages 30, 92, 95 - 98, XP008173441 Retrieved from the Internet: <URL:http://site.ebrary.com/lib/alltitles/d ocDetail.action?doclD=10251297> [retrieved on 2013-01-15]

## Description

### TECHNICAL FIELD

This invention relates to devices comprising means or steps for providing communication or controlling between a recording/reproducing device and an additional device located close by, such as within a home.

### BACKGROUND ART

Prior to the disclosed invention, a camera affixed to model trains suffered from signal transmission problems due to the electrical signal from the model railroad engine interfering with a wireless signal from the camera affixed to the model train to an output location. The prior art includes:

U.S. Patent 6,229,136 issued to Banks notes that realism is one of the primary goals sought by railroader hobbyists as they painstakingly build and operate their model railroad layouts. The hobbyist currently sees an un-realistic, overhead or aerial-like, view of the layout because of the relative size of the hobbyist to the size of the layout. In order to give the hobbyist the train engineer's viewpoint of the layout, the present invention installs a wireless video system inside any scale model railroad engine, which is picked up by a wireless receiver and displayed on a monitor or television (TV) screen or recorded on a Digital Video Recorder (DVR). Banks attempts to solve this problem with a camera that has a lens, which can move in reference to ambient light. While this would theoretically lead to a better image, it fails to account for the electrical interference caused by the model railroad engine and has no usable filtering theory.

EP Patent Publication 1,686,692 A2 filed by Blackwell explains that model railroading hobbyists go to great effort to make detailed, realistic scenery and layout in their chosen scale of the real world. Blackwell recommends that a user can increase image effectiveness by adjusting lighting. While this is true, it teaches away from the present
invention, which utilizes a power supply circuit to ensure consistent power to the camera.
US 2007/0001058 discloses a model train accessory controller connectable to a DC power pack having a throttle to apply a power signal to a set of train tracks.
US 2009/162814 discloses a video-captured model vehicle simulator.
US 2005/184197 discloses a voltage regulator configure to regulate an alternating current source provided to a model toy railroad layout.

### SUMMARY

In accordance with one aspect of the present invention there is provided a model railway train as set out in claim 1.

### BRIEF DESCRIPTION OF THE DRAWINGS

Having thus described the invention in general terms, reference will now be made to the accompanying drawings, which are not necessarily drawn to scale, and wherein:
Fig. 1 shows a side view of a model railroad engine with one possible location for installation of the present invention.
Fig. 2 shows a circuit diagram of the switching power supply of the present invention.
Fig. 3 shows a system block diagram of the present invention.
Fig. 4 shows a second embodiment of the circuit diagram of the switching power supply of the present invention.
Fig. 5 shows the battery management circuit.

### BEST MODE FOR CARRYING OUT THE INVENTION

Embodiments of the present invention overcome many of the obstacles associated with displaying video on model trains, and now will be described more fully hereinafter with reference to the accompanying drawings that show some, but not all embodiments of the claimed inventions. Indeed, the invention may be embodied in many different forms and should not be construed as limited to the embodiments set forth herein. Rather, these embodiments are provided so that this disclosure will satisfy applicable legal requirements. Like numbers refer to like elements throughout.

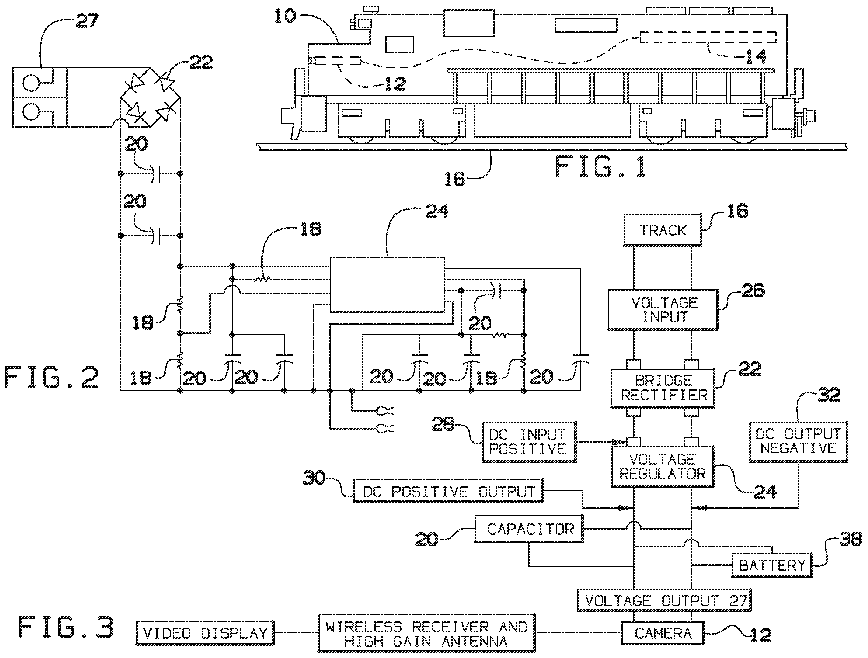

Fig. 1 shows a side view of a typical model railroad engine with the modifications of the present invention inserted. Of course, other rolling stock could be used for mounting the video system. The location of the intended device or camera 12 and the power supply circuit 14, illustrates one possible location depending upon the design of model railroad engine 10. As used here an "intended device" means camera 12, a second camera 12 or individual components of camera 12. As is common, the model railroad train comprises model railroad engine 10. The smaller N and HO gauge engines as in Fig. 1, have one camera 12, but power supply circuit 14 has the capability to power two or more intended devices or cameras in these gauges as well as any larger gauges; for instance one camera pointing forward and one camera pointing backwards. In this configuration, the view from the model railroad engine 10 would be coming and going at the same time. As such, the power supply circuit 14, as shown in Fig. 1, was designed to minimize the footprint to afford greater flexibility for placement and positioning in the various model railroad engine designs and scales available from different manufacturers of model locomotives. The model railroad engine is supported by tracks 16 and wheels 19 that conduct electrical power, either alternating current (AC) or direct current (DC) from the track 16 to power the power supply circuit 14. Notably, the power supply circuit 14 provides a specific direct current output voltage to camera 12, which helps to ensure a consistent camera carrier wave in camera 12. The camera carrier wave can be a video signal, an audio signal or an audio-video signal.

Fig. 2 shows the power switching system in more detail. The present invention receives power from the connectors 26 to a bridge rectifier 22 and at least one buffer capacitor 21 between bridge rectifier 22 and the remainder of the circuit to serve as buffering. The at least one buffer capacitor 21 also stores electrical power to smooth out spikes in the event that the model railroad engine passes over areas of a track that have poor electrical contact. Voltage regulator 24 refers to a preferred type of voltage regulator that dissipates excess voltage by increasing amperage output rather than dissipating the energy as heat. This provides the system much greater longevity both in terms of real-time periods of usage as well as extended lifetime of components. Power supply circuit 14 further compensates for spikes and gaps in power supplied to the model railroad engine due to track anomalies providing a clean power to camera 12.

Fig. 2 shows a power supply circuit 14 compatible with camera systems or other intended device with readily available AC adapters that do not match the needs of the camera 12 or other intended device. In these, a step-down circuit is included with the camera 12, which produces appreciable heat. Thus, this design is for use with the commercial camera 12 receiving power from the output connectors 27 with all of the camera 12 circuitry intact. The remainder of the power supply circuit 14 consists of a network of resistors 18 and capacitors 20 that were empirically selected.

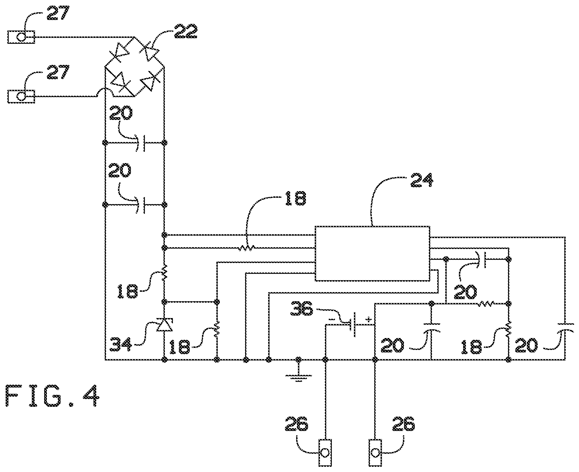

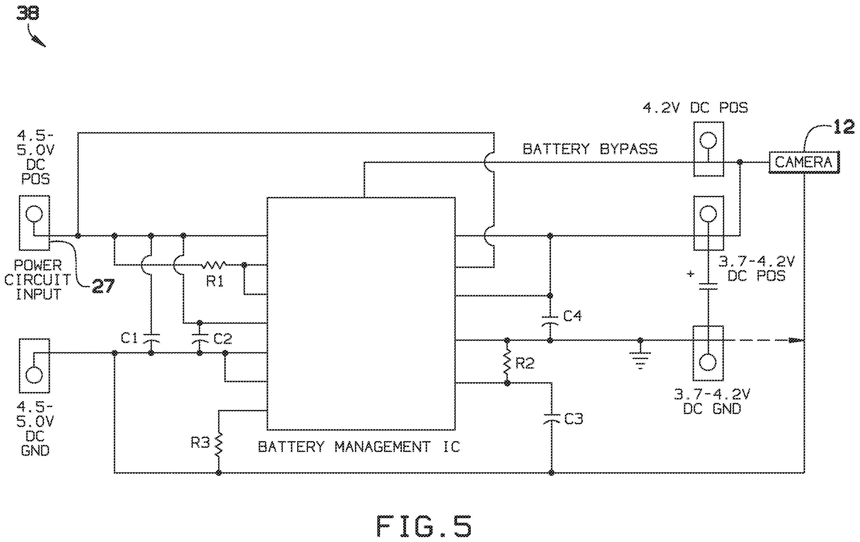

Fig. 3 is a block diagram of the present invention. Power is conducted from The track 16 to the model railroad engine 10 through the wheels 19 and then providing a voltage input 26 as shown in Fig. 2 and 4. Then, electricity flows through a bridge rectifier 22, and emerging as a DC positive input 28 and negative input (not shown) and then into the voltage regulator 24 emerging as DC positive output 30 and DC negative output 32. One or more output capacitors 20 as shown in Fig. 2 and Fig. 4 and at least one rechargeable battery 38, which can be a chip battery or Lithium polymer battery, which is recharged by the output of the power supply circuit 14 directed through a battery management circuit detailed in Figure 5, all of which maintain constant output for the camera(s) 12 input. Camera 12 transmits video images on a camera carrier wave via a built-in antenna (un-shown). Camera 12 is communicatively coupled to a built-in antenna, a length of the transmitting antenna is proportional to a length of the camera carrier wave. The use of the length of the camera carrier wave to determine the length of the transmitting antenna enhances the camera carrier wave produced by the camera to prevent the interference from distorting the camera carrier wave. The camera carrier wave is received by an antenna attached to a wireless receiver, which may be a high-gain antenna 31. The commercial high-gain antenna 31 increases the signal to noise ratio where other wireless devices are in close proximity to the camera system and thereby reduces ambient interference. Lastly, the receiver output is a signal that may be either displayed on a video capture 31 or alternatively on a monitor/TV or on any video recording system.

Fig. 4 shows another embodiment that reduces the heat output found in the first circuit seen in Fig. 2, and delivers the exact voltage that the camera 12 or other intended device needs without the step-down circuit. This embodiment also substitutes resistors 18 and capacitors 20 that have different output values and a diode 34 that differs from those found in the circuit seen in Fig. 2. Moreover, some of the components illustrated in the design in Fig. 2 were found to be unnecessary for the direct output circuit and have been removed. Fig. 4 also shows a battery 38, which is rechargeable by the output of the switching regulator 24 through the battery management circuit detailed in Figure 5, thereby maintaining a constant output to the camera 12 in the event power to the power supply circuit 14 is interrupted. In like manner, the battery and management circuit 38 may also be inserted into the power supply circuit 14 found in Fig. 2 in the same position of the circuit to serve the same function. The remainder of the power supply circuit 14 consists of a network of resistors 18 and capacitors 20 that were empirically selected. Connectors 26 supply power at the input to the bridge rectifier 22 and connectors 27 provides output from the power supply circuit 14 directly to the battery management circuit detailed in Figure 5 and thus removing the camera step-down circuit.

Figure 5 provides a detailed diagram of the battery management circuit represented as item 38 in the block diagram in Figure 3. The Battery Management Circuit (BMC) allows the camera 12 or other intended device to receive continuous power regardless of the track contact status. This circuit will immediately power the camera directly from the track source connection 27 regardless of the battery charge status. While the track source is in use, the BMC will fully charge the battery. Once the battery is fully charged, the BMC senses the charge status and ceases further charging until the battery is used as the power source. When the track contact fails, the battery will instantly become the power source for the camera 12 or other intended device. The BMC also has a timer as part of the design that will allow for setting a maximum time after track contact is lost to turn off the battery as a source of power such as removal of the camera system mounted rolling stock from the rails for storage until the next usage. Thus, the timer feature would become an automatic on/off switch to assure that the battery will never be discharged to the point of damage. As an alternative to this feature, the battery lead to the camera may have an additional switching mechanism. This additional switching mechanism may be a wired manual switch mounted on the exterior surface of the rolling stock. Moreover, in the case of a decoder controlled engine, one of the programmable decoder configuration variables (CVs) may be set to switch the camera on and off by wiring to the decoder sites controlled by the selected CV. Thus, through the use of a digital command control (DCC) throttle, the CV could be used to turn the camera on and off to assure that the battery is not drained to the point of damage. The present invention allows the hobbyist to retrofit their existing engines with easily installed kits. Model railroad suppliers can also provide the at least one perspective view such as a first person perspective view or an engineer's view as a factory-installed option in various locomotives or other rolling stock using the present invention.

The BMC may also be used to manage power to the model railroad engine via appropriately selected battery or batteries and wiring to the model railroad engine contact points directly (in the case of a DC powered engine) or to the model railroad engine contact points of a decoder (in the case of a DCC controlled engine). Thus, when a system equipped model railroad engine passes over track with poor wheel to rail contact, the BMC would provide alternate power to the model railroad engine's motor. Likewise, when electrical power from the power source is interrupted, the battery management circuit switches from the power source to the at least one rechargeable battery in order to maintain a consistent flow of power to the components.

### INDUSTRIAL APPLICABILITY

The primary objective of the present invention is to give model railroaders a true Engineer's View or first person perspective of their model railroad layout with an economical system. Another objective is to miniaturize the system to fit in locomotives built by various manufacturers from the largest scales down to "N" scale and "Z" scale.

Another objective of the present invention is to solve the problems of voltage spikes and momentary pauses in wheel to track contact causing voltage gaps on both engine and camera system operation and reliability. Another objective of the present invention is to transmit the video signal from the engine or other rolling stock to the receiver wirelessly. Another objective is to receive a transmitted signal to provide a realistic and stable video image of the Engineer's View or first person perspective on a video screen or recorded on a digital video recorder (DVR) or other recording device.

## Claims

1. A model railway train for use in a system that transmits at least one perspective view from a model railroad train to video capture (31) and prevents interference from a model railroad engine (10) in the model railroad train, the train comprising:
a model railroad engine (10) mechanically coupled to wheels (19), whereby in use when the wheels (19) are immediately adjacent to and electrically coupled to tracks (16) which are electrically coupled to a power source electrical power flows from the power source though the tracks (16) to the model railroad engine in order to power the model railroad engine along the tracks (16) by turning the wheels (19);
a mechanically connected camera (12);
a power supply circuit (14);
wherein the camera (12) is electrically coupled to the power supply circuit (14), the power supply circuit comprising:
a bridge rectifier (22) in series with a voltage regulator (24) that dissipates excess voltage by increasing amperage output rather than dissipating the electrical power as heat;
an output where the output is configured to be electrically coupled to at least one rechargeable battery (38) on the output of the power supply circuit (14) for reserve power supply and to smooth out spikes and gaps to provide a specific direct current output voltage to an intended device, the power supply circuit (14) compensating for spikes and gaps in power supplied to the model railroad engine (10) due to track anomalies; and
a battery management circuit (36) configured to switch between providing the electrical power from the power source and providing the electrical power from the at least one rechargeable battery (38), the battery management circuit (36) further configured to, when the electrical power from the power source is interrupted, switch from the power source to the at least one rechargeable battery (38) to maintain a consistent flow of power to the intended device, wherein the camera (12) is further electrically coupled to the battery management circuit (36);
wherein the camera (12) is configured to be communicatively coupled to the video capture (31), such that the video capture can display a camera carrier wave that is not distorted by the interference from the model railroad engine, because the power supply circuit (14) compensates for spikes and gaps in power supplied to the model railroad engine due to track anomalies providing a clean power to the camera.

2. The model railway train of Claim 1, wherein the camera (12) is communicatively coupled to a wireless transmitter which transmits a camera carrier wave through a transmitting antenna; the transmitting antenna is configured to send the camera carrier wave to a receiving antenna (31), wherein the receiving antenna is communicatively coupled to a receiver and the receiver is communicatively coupled to the video capture;
a length of the transmitting antenna is proportional to the length of the camera carrier wave; the use of the length of the camera carrier wave to determine the length of the transmitting antenna enhances the camera carrier wave produced by the camera (12) to prevent the interference from distorting the camera carrier wave.

3. The model railway train of Claim 2, wherein the receiving antenna is a high-gain antenna in order to enhance reception of the camera carrier wave and to avoid ambient interference.

4. The model railway train of claim 1,
the power supply circuit (14) further comprising at least one buffer capacitor (20) to smooth out spikes and gaps in power supplied to the model railroad engine (10) due to track anomalies providing the clean power to the intended device.

5. The model railway train of claim 1,
wherein the battery management circuit (36) is configured to direct the electrical power to charge the at least one rechargeable battery (38).

6. The model railway train of claim 1, wherein the intended device is the camera (12).

## Patentansprüche

1. Modellbahnzug zur Verwendung in einem System, das mindestens eine perspektivische Ansicht von einem Modellbahnzug zu einer Videoaufnahme (31) überträgt und Störungen von einer Modellbahnlokomotive (10) in dem Modellbahnzug verhindert, wobei der Zug umfasst:
eine Modellbahnlokomotive (10), die mechanisch mit Rädern (19) gekoppelt ist, wodurch im Betrieb, wenn die Räder (19) unmittelbar an Gleisen (16) anliegen, die mit einer Stromquelle elektrisch gekoppelt sind, und sie elektrisch mit diesen gekoppelt sind, elektrischer Strom von der Stromquelle durch die Gleise (16) zur Modellbahnlokomotive fließt, um die Modellbahnlokomotive durch Drehen der Räder (19) entlang der Gleise (16) anzutreiben;
eine mechanisch verbundene Kamera (12);
eine Stromversorgungsschaltung (14);
worin die Kamera (12) mit der Stromversorgungsschaltung (14) elektrisch gekoppelt ist, wobei die Stromversorgungsschaltung umfasst:
einen Brückengleichrichter (22) in Reihe mit einem Spannungsregler (24), der überschüssige Spannung abführt, indem er die Stromabgabe erhöht, statt die elektrische Leistung als Wärme abzuführen;
einen Ausgang, wobei der Ausgang dafür konfiguriert ist, mit mindestens einer wiederaufladbaren Batterie (38) am Ausgang der Stromversorgungsschaltung (14) elektrisch gekoppelt zu werden, und zwar zur Reservestromversorgung und um Spitzen und Lücken auszugleichen, um einer vorgesehenen Vorrichtung eine bestimmte Gleichstrom-Ausgangsspannung bereitzustellen, wobei die Stromversorgungsschaltung (14) Spitzen und Lücken in dem der Modellbahnlokomotive (10) zugeführten Strom aufgrund von Gleisunregelmäßigkeiten kompensiert; und
eine Batteriemanagementschaltung (36), die dafür konfiguriert ist, zwischen dem Bereitstellen des elektrischen Stroms von der Stromquelle und dem Bereitstellen des elektrischen Stroms von der mindestens einen wiederaufladbaren Batterie (38) umzuschalten, wobei die Batteriemanagementschaltung (36) ferner dafür konfiguriert ist, wenn der elektrische Strom von der Stromquelle unterbrochen wird, von der Stromquelle auf die mindestens eine wiederaufladbare Batterie (38) umzuschalten, um einen gleichbleibenden Stromfluss zu der vorgesehenen Vorrichtung aufrechtzuerhalten, worin die Kamera (12) ferner mit der Batteriemanagementschaltung (36) elektrisch gekoppelt ist;
worin die Kamera (12) dafür konfiguriert ist, kommunikativ mit der Videoaufnahme (31) gekoppelt zu werden, sodass die Videoaufnahme eine Kameraträgerwelle anzeigen kann, die nicht durch die Störung von der Modellbahnlokomotive verzerrt wird, weil die Stromversorgungsschaltung (14) Spitzen und Lücken in dem der Modellbahnlokomotive zugeführten Strom aufgrund von Gleisunregelmäßigkeiten kompensiert, was der Kamera einen stabilen Strom bereitstellt.

2. Modellbahn nach Anspruch 1, worin die Kamera (12) kommunikativ mit einem drahtlosen Sender gekoppelt ist, der eine Kameraträgerwelle über eine Sendeantenne überträgt; wobei die Sendeantenne dafür konfiguriert ist, die Kameraträgerwelle zu einer Empfangsantenne (31) zu senden, worin die Empfangsantenne kommunikativ mit einem Empfänger gekoppelt ist und der Empfänger kommunikativ mit der Videoaufnahme gekoppelt ist;
wobei eine Länge der Sendeantenne proportional zur Länge der Kameraträgerwelle ist; wobei die Verwendung der Länge der Kameraträgerwelle, um die Länge der Sendeantenne zu bestimmen, die durch die Kamera (12) erzeugte Kameraträgerwelle verbessert, um zu verhindern, dass die Störung die Kameraträgerwelle verzerrt.

3. Modellbahn nach Anspruch 2, worin die Empfangsantenne eine Antenne mit hohem Gewinn ist, um den Empfang der Kameraträgerwelle zu verbessern und Umgebungsstörungen zu vermeiden.

4. Modellbahn nach Anspruch 1,
wobei die Stromversorgungsschaltung (14) ferner mindestens einen Pufferkondensator (20) umfasst, um Spitzen und Lücken in dem der Modellbahnlokomotive (10) zugeführten Strom aufgrund von Gleisunregelmäßigkeiten zu kompensieren, was der vorgesehenen Vorrichtung den stabilen Strom bereitstellt.

5. Modellbahn nach Anspruch 1,
worin die Batteriemanagementschaltung (36) dafür konfiguriert ist, den elektrischen Strom zu lenken, um die mindestens eine wiederaufladbare Batterie (38) zu laden.

6. Modellbahn nach Anspruch 1, worin die vorgesehene Vorrichtung die Kamera (12) ist.

## Revendications

1. Chemin de fer miniature destiné à être utilisé dans un système qui transmet au moins une vue en perspective depuis un train de modélisme ferroviaire jusqu'à un moyen de capture de vidéo (31) et qui empêche une interférence qui est issue d'un moteur de locomotive miniature (10) dans le train de modélisme ferroviaire, le train comprenant :
un moteur de locomotive miniature (10) qui est couplé mécaniquement à des roues (19), d'où il résulte que, en utilisation, lorsque les roues (19) sont immédiatement adjacentes et couplées électriquement à des rails (16) qui sont couplés électriquement à une source de puissance, de la puissance électrique circule depuis la source de puissance par l'intermédiaire des rails (16) jusqu'au moteur de locomotive miniature afin d'alimenter en puissance le moteur de locomotive miniature le long des rails (16) au moyen de la rotation des roues (19) ;
une caméra connectée mécaniquement (12) ;
un circuit d'alimentation en puissance (14) ;
dans lequel la caméra (12) est couplée électriquement au circuit d'alimentation en puissance (14), le circuit d'alimentation en puissance comprenant :
un redresseur en pont (22) en série avec un régulateur de tension (24) qui dissipe une tension excessive en augmentant une sortie d'ampérage en lieu et place de dissiper la puissance électrique en tant que chaleur ;
une sortie, dans lequel la sortie est configurée de manière à ce qu'elle soit couplée électriquement à au moins une batterie rechargeable (38) sur la sortie du circuit d'alimentation en puissance (14) pour une alimentation en puissance de réserve et de manière à ce qu'elle évacue par lissage des pics et des creux de manière à fournir une tension de sortie continue spécifique à un dispositif visé, le circuit d'alimentation en puissance (14) compensant des pics et des creux au niveau de la puissance qui est alimentée sur le moteur de locomotive miniature (10) qui sont dus à des anomalies de rail ; et
un circuit de gestion de batterie (36) qui est configuré de manière à ce qu'il réalise une commutation entre la fourniture de la puissance électrique depuis la source de puissance et la fourniture de la puissance électrique depuis l'au moins une batterie rechargeable (38), le circuit de gestion de batterie (36) étant en outre configuré de manière à ce que, lorsque la puissance électrique qui provient de la source de puissance est interrompue, il réalise une commutation depuis la source de puissance sur l'au moins une batterie rechargeable (38) de manière à maintenir une circulation de puissance uniforme sur le dispositif visé, dans lequel la caméra (12) est en outre couplée électriquement au circuit de gestion de batterie (36) ;
dans lequel la caméra (12) est configurée de manière à ce qu'elle soit couplée en termes de communication au moyen de capture de vidéo (31) de telle sorte que le moyen de capture de vidéo puisse afficher une onde porteuse de caméra qui n'est pas distordue par l'interférence qui est issue du moteur de locomotive miniature, du fait que le circuit d'alimentation en puissance (14) compense des pics et des creux au niveau de la puissance qui est alimentée sur le moteur de locomotive miniature qui sont dus à des anomalies de rail, ce qui fournit une puissance stable à la caméra.

2. Chemin de fer miniature selon la revendication 1, dans lequel la caméra (12) est couplée en termes de communication à un émetteur sans fil qui émet une onde porteuse de caméra par l'intermédiaire d'une antenne d'émission ; l'antenne d'émission est configurée de manière à ce qu'elle envoie l'onde porteuse de caméra à une antenne de réception (31), dans lequel l'antenne de réception est couplée en termes de communication à un récepteur et le récepteur est couplé en termes de communication au moyen de capture de vidéo ;
une longueur de l'antenne d'émission est proportionnelle à la longueur de l'onde porteuse de caméra ; l'utilisation de la longueur de l'onde porteuse de caméra pour déterminer la longueur de l'antenne d'émission améliore l'onde porteuse de caméra qui est produite par la caméra (12) de manière à empêcher que l'interférence ne distorde l'onde porteuse de caméra.

3. Chemin de fer miniature selon la revendication 2, dans lequel l'antenne de réception est une antenne à gain élevé afin d'améliorer la réception de l'onde porteuse de caméra et afin d'éviter une interférence ambiante.

4. Chemin de fer miniature selon la revendication 1,
dans lequel le circuit d'alimentation en puissance (14) comprend en outre au moins un condensateur tampon (20) de manière à évacuer par lissage des pics et des creux au niveau de la puissance qui est alimentée sur le moteur de locomotive miniature (10) du fait d'anomalies de rail, ce qui fournit de la puissance stable au dispositif visé.

5. Chemin de fer miniature selon la revendication 1, dans lequel :
le circuit de gestion de batterie (36) est configuré de manière à ce qu'il dirige la puissance électrique afin de charger l'au moins une batterie rechargeable (38).

6. Chemin de fer miniature selon la revendication 1, dans lequel le dispositif visé est la caméra (12).
